# EUROPÄISCHE PATENTSCHRIFT

(11) **EP 0 849 105 B1**
(45) Veröffentlichungstag und Bekanntmachung des Hinweises auf die Patenterteilung: **18.04.2001**
(21) Anmeldenummer: 97122235.1
(22) Anmeldetag: 17.12.1997
(51) Int. Cl.: B60J 7/043

(54) **Öffnungsfähiger Deckel, insbesondere für ein Fahrzeug**
Panel for open roof especially for vehicle
Panneau ouvrant en particulier pour véhicule

(30) Priorität: 19.12.1996 FR 9615664
(43) Veröffentlichungstag der Anmeldung: 24.06.1998
(73) Patentinhaber: WEBASTO KAROSSERIESYSTEME GmbH, D-82131 Stockdorf (DE)
(72) Erfinder: De Gaillard, Francois, 85390 Mouilleron en pareds (FR)
(74) Vertreter: Wiese, Gerhard

(56) Entgegenhaltungen:
- EP-A- 0 308 332
- WO-A-88/01949
- DE-U- 8 514 459

## Beschreibung

Die vorliegende Erfindung betrifft einen Deckel zum wahlweisen Verschließen oder wenigstens teilweisen Freigeben einer Öffnung, vorzugsweise einer Öffnung in einem Fahrzeug, mit seitlich am Deckel angeordneten Führungsorganen, die mit längs der Öffnung verlaufenden seitlichen Führungselementen im Eingriff stehen, mit einer Betätigungs- und Verriegelungsvorrichtung, die etwa in der Mitte der Öffnung mit dem Deckel in Verbindung steht, und mit einem hinter der Öffnung angeordneten dachfesten Führungselement, mit dem wenigstens ein am Deckel angeordnetes Führungsorgan zumindest bei einer Verschiebung des Deckels in Eingriff bringbar ist.

Es ist eine Vielzahl von Deckeln der genannten Art bekannt. Diese sind, seien sie manuell oder elektrisch bedienbar, jedoch oftmals kostspielig und komplex, insofern als sie eine perfekte Dichtheit gegenüber Witterungseinflüssen, insbesondere gegenüber Regenwasser und Wind, aufweisen müssen. Darüber hinaus müssen die öffnungsfähigen Deckel als Ausstattung von Fahrzeugen einem mit der Fahrgeschwindigkeit der Fahrzeuge einhergehenden Druck widerstehen und im allgemeinen in geschlossener Position die exakte Form des Fahrzeugdachs einnehmen, um keine Störungen in der Luftströmung über das Dach bei einer Bewegung des Fahrzeugs zu erzeugen. Dies setzt eine präzise Ausrichtung des öffnungsfähigen Deckels mit dem Dach in der geschlossenen Position des Deckels voraus, was eine präzise und daher kostspielige Montage erfordert.

Das DE-Gebrauchsmuster G 85 14 459.2 hat einen Deckel der eingangs genannten Art zum Gegenstand, der an seiner Hinterkante ausstellbar und in Fahrtrichtung soweit verschiebbar ist, daß die Öffnung des Daches nahezu vollständig freigegeben wird. Die Betätigung und Arretierung des Deckels ist jedoch mit Problemen behaftet. So sind zwei getrennte Betätigungs- und Arretierungsvorrichtungen vorgesehen, von denen zuerst eine am hinteren Ende des Deckels angeordnete Vorrichtung zum Ausstellen des hinteren Deckelrandes über das feste Fahrzeugdach und Arretierung in einem gewählten Winkel betätigt werden muß, bevor über eine am vorderen Rand des Deckels befindliche Vorrichtung der Deckel in Fahrtrichtung geöffnet und in mehreren fest vorgegebenene Stufen arretiert werden kann.

Aus der DE-Offenlegungsschrift 2 036 076 ist weiterhin ein Deckel bekannt, der einen als Arretierungsvorrichtung wirkenden Sterngriff, der mit einer zentralen sich zwischen seitlichen Rändern der Öffnung befindlichen Führungsvorrichtung in Eingriff steht, und weiterhin eine Betätigungsvorrichtung zur Verschiebung des Deckels umfaßt. Die an einem die Öffnung umgebenden Rahmen angeordneten seitlichen Führungen erlauben eine sicher geführte Öffnung des Deckels jedoch nur bis zu einem begrenzten Öffnungsweg, so daß zur weiteren Öffnung der Deckel ganz vom Fahrzeugdach gelöst und abgenommen werden kann. Die Betätigung der Arretierungsvorrichtung ist als wenig komfortabel anzusehen und wird durch die Trennung von Betätigungs- und Arretierungsvorrichtung weiter erschwert.

Der Erfindung liegt die Aufgabe zugrunde, einen öffnungsfähigen Deckel der eingangs genannten Art zu schaffen, der die Nachteile bekannter öffnungsfähiger Deckel umgeht, im geöffneten Zustand eine möglichst große Öffnung bei gleichzeitig sicherer Führung erlaubt und der, obwohl wirtschaftlich herzustellen und zu montiern, dennoch eine zuverlässige und komfortable Bedienung sowie Arretierung des Deckels in jeder Lage gestattet.

Diese Aufgabe wird bei einem Deckel zum wahlweisen Verschließen oder wenigstens teilweisen Freigeben einer Öffnung, vorzugsweise einer Öffnung in einem Fahrzeug, mit seitlich am Deckel angeordneten Führungsorganen, die mit längs der Öffnung verlaufenden seitlichen Führungselementen im Eingriff stehen, mit einer Betätigungs- und Verriegelungsvorrichtung, die etwa in der Mitte der Öffnung mit dem Deckel in Verbindung steht, und mit einem hinter der Öffnung angeordneten dachfesten Führungselement, mit dem wenigstens ein am Deckel angeordnetes Führungsorgan zumindest bei einer Verschiebung des Deckels in Eingriff bringbar ist, gelöst, der erfindungsgemäß dadurch gekennzeichnet ist, daß zwischen den seitlichen Führungselementen eine zentrale Führungsvorrichtung angeordnet ist, mit der die Betätigungs- und Verriegelungsvorrichtung in jeder Position des Deckels in Eingriff bringbar ist.

Der Deckel nach der Erfindung erlaubt mittels des hinter der Dachöffnung angeordneten dachfesten Führungselements und der seitlichen Führungselemente ein fast vollständiges Freilegen der Dachöffnung bei gleichzeitig präziser Führung auch bei voller Öffnung des Deckels. Weiterhin ist der Deckel durch die Betätigungs- und Verriegelungsvorrichtung leicht zu verschieben und in jeder Position zu arretieren.

Vorteilhafte Weiterbildungen der Erfindung sind Gegenstand der Unteransprüche.

Vorzugsweise umfaßt der Deckel eine Rahmeneinheit, die sich entlang Rändern der Öffnung erstreckt und welche die seitlichen Führungselemente, das hinter der Öffnung angeordnete dachfeste Führungselement sowie die zentrale Führungsvorrichtung aufweist, wobei die Rahmeneinheit auf ihrer oberen Fläche eine elastische Randdichtung besitzt, welche die Öffnung umgibt. Die Rahmeneinheit kann einstückig ausgebildet sein und läßt sich auf einfache Weise mit dem Fahrzeugdach verbinden.

Insbesondere haben das dachfeste und die seitlichen Führungselemente ein vorbestimmtes Profil, so daß der Deckel in der geschlossenen Stellung des Deckels auf der elastischen Randdichtung mittels seiner unteren Seite anliegt und zumindest beim Verschieben einen horizontalen Abstand von der elastischen Randdichtung einnimmt. Dies stellt eine Verschiebung ohne großen Kraftaufwand und ohne die Gefahr einer Beschädigung der Randdichtung sicher und legt den bewegbaren Deckel in seiner geschlossenen Position auf der elastischen Randdichtung mit einem ausreichenden Druck an, um die erforderliche Dichtheit zu erreichen.

Entsprechend einer weiteren Ausgestaltung der Erfindung ist die mit dem Deckel verbundene Betätigungs- und Verriegelungsvorrichtung zur Betätigung der Verschiebung des Deckels längs der zentralen Führungsvorrichtung mittels einer Kulissenanordnung bewegbar und weist ein Arretierungsorgan auf, welches im wesentlichen senkrecht zur zentralen Führungsvorrichtung verschiebbar ist zwischen einer arretierenden Position, in der es mit der zentralen Führungsvorrichtung in Eingriff gelangt, und einer freigebenden Position, in der es außer Eingriff mit der zentralen Führungsvorrichtung steht, um den Deckel mit Bezug zur zentralen Führungsvorrichtung in jeder Position zu arretieren bzw. zur Verschiebung freizugeben. Vorzugsweise weist dabei die Betätigungs- und Verriegelungsvorrichtung ein Griffelement sowie eine Federanordnung auf, die derart mit einer die Verschiebung des Arretierungsorgans steuernden Anordnung zusammenwirken, daß das Arretierungsorgan bei Nichtbetätigung des Griffelements in seiner arretierenden Grundposition und bei Betätigung des Griffelements in Längsrichtung mit Bezug zur zentralen Führungsvorrichtung in seiner freigebenden Position steht. Hierdurch wird für eine einfache Bedienung des Deckels gesorgt, der bei Betätigung des Griffelements automatisch zur Verschiebung freigegeben und bei Loslassen des Griffelements selbsttätig wieder in der erreichten Position arreteiert wird.

Nachfolgend ist ein bevorzugtes Ausführungsbeispiel der Erfindung unter Bezugnahme auf die beiliegenden Zeichnungen näher erläutert. Dabei ist:
- Fig. 1: eine teilweise perspektivische Ansicht eines Deckels nach einer Ausführungsform der vorliegenden Erfindung mit einem bewegbaren Deckel in geschlossener Stellung;
- Fig. 2: eine Darstellung ähnlich der Fig. 1 mit nicht vorhandenem bewegbaren Deckel;
- Fig. 3: eine vergrößerte Darstellung des Details III der Fig. 2;
- Fig. 4: eine vergrößerte Schnittdarstellung entlang der Linie IV-IV der Fig. 1;
- Fig. 5: eine vergrößerte Schnittdarstellung entlang der Linie V-V der Fig. 1;
- Fig. 6: eine vergrößerte Schnittdarstellung entlang der Linie VI-VI der Fig. 1;
- Fig. 7: eine vergrößerte Schnittdarstellung entlang der Linie VII-VII der Fig. 1;
- Fig. 8: eine Darstellung ähnlich der Fig. 7 mit dem bewegbaren Deckel in teilweise geöffneter Position;
- Fig. 9: eine vergrößerte Schnittdarstellung entlang der Linie IX-IX der Fig. 1;
- Fig. 10: eine vergrößerte Schnittdarstellung entlang der Linie X-X der Fig. 1;
- Fig. 11: eine Teilansicht ähnlich der Fig. 5 mit dem bewegbaren Deckel in seiner wesentlich geöffneten Position;
- Fig. 12: eine Schnittdarstellung entlang der Linie XII-XII der Fig. 9;
- Fig. 13: eine Halbschnittdarstellung von links entlang der Linie XIII-XIII der Fig. 12;
- Fig. 14: eine Halbschnittdarstellung von links entlang der Linie XIV-XIV der Fig. 12;
- Fig. 15: eine Darstellung ähnlich der Fig. 12 mit der Betätigungs- und Verriegelungsvorrichtung in der Position, die einer Verschiebung des bewegbaren Deckels in Öffnungsrichtung des Deckels entspricht.

In der in den Figuren dargestellten Ausführungsform enthält der insgesamt mit 1 bezeichnete öffnungsfähige Deckel einen in Längsrichtung mit Bezug zu einer Öffnung 4 in einem Dach 5, insbesondere in einem Fahrzeugdach, bewegbaren Deckel 2, zwei seitliche feststehende parallele Führungselemente 6, 7, die sich je entlang einer seitlichen in Längsrichtung verlaufenden Begrenzung 8 bzw. 9 der Öffnung 4 erstrecken, zwei Bolzen 10, 11, die am bewegbaren Deckel 2 in der Nähe jeder seitlichen in Längsrichtung verlaufenden Begrenzung 8, 9 der Öffnung 4 befestigt und für eine Gleitbewegung in dem entsprechenden seitlichen Führungselement 6, 7 ausgelegt sind, um den bewegbaren Deckel 2 in seinen Verschiebungen in die eine Richtung 17 oder die andere Richtung 18 zu führen, sowie eine Betätigungs- und Verriegelungsvorrichtung 43.

Der öffnungsfähige Deckel 1 umfaßt weiterhin eine Rahmeneinheit 13, die sich entlang Rändern 8, 9 sowie 14, 15 der Öffnung 4 erstreckt und die zwei seitliche in Längsrichtung verlaufende Führungselemente 6, 7 und ein zentral angeordnetes in Längsrichtung verlaufendes dachfestes Führungselement 16 aufweist, welches sich vom Rahmen 13 in Öffnungsrichtung 17 des bewegbaren Deckels 2 erstreckt. Die Rahmeneinheit 13 weist auf ihrer oberen Fläche 19 eine elastische Randdichtung 20 auf, welche die Dachöffnung 4 umgibt. Der bewegbare Deckel 2 besitzt auf seiner unteren Seite 21 neben den mit den seitlichen Führungselementen 6 und 7 in Eingriff befindlichen Bolzen 10 und 11 einen weiteren Bolzen 22 sowie fakultativ einen Bolzen 25, die für eine Gleitbewegung innerhalb des dachfesten Führungselements 16 der Rahmeneinheit 13 ausgelegt sind. Der bewegbare Deckel 2 hat solche vorgegebene Abmessungen, daß er mittels seiner unteren Seite 21 auf der elastischen Randdichtung 20 aufliegen kann. Die Führungselemente 6, 7, 16 haben ein vorbestimmtes Profil, so daß der bewegbare Deckel 2 zumindest in der geschlossenen Stellung des Deckels 2 auf der elastischen Randdichtung 20 anliegt.

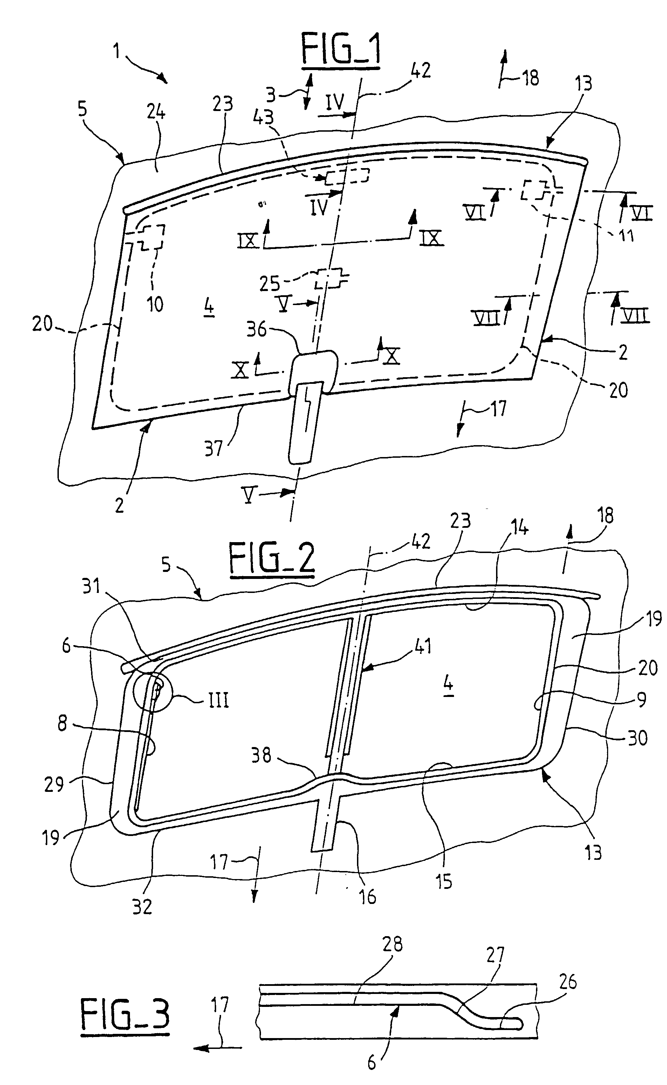

Wie in Fig. 2 dargestellt, umgibt die Rahmeneinheit 13 die vier Begrenzungen der Öffnung 4. Die Rahmeneinheit 13 ist beispielsweise in Kunststoffmaterial ausgeführt. Sie kann in einem einzigen Stück ausgeführt sein und ist entlang der Begrenzungen 8, 9, 14, 15 der Öffnung 4 angebracht. Die Öffnungsrichtung 17 des bewegbaren Deckels 2 weist in Richtung des Hecks des Fahrzeugs. Die Fahrtrichtung des Fahrzeugs weist, als entgegengesetzte Richtung 18, in den Fign. 1 und 2 nach oben.

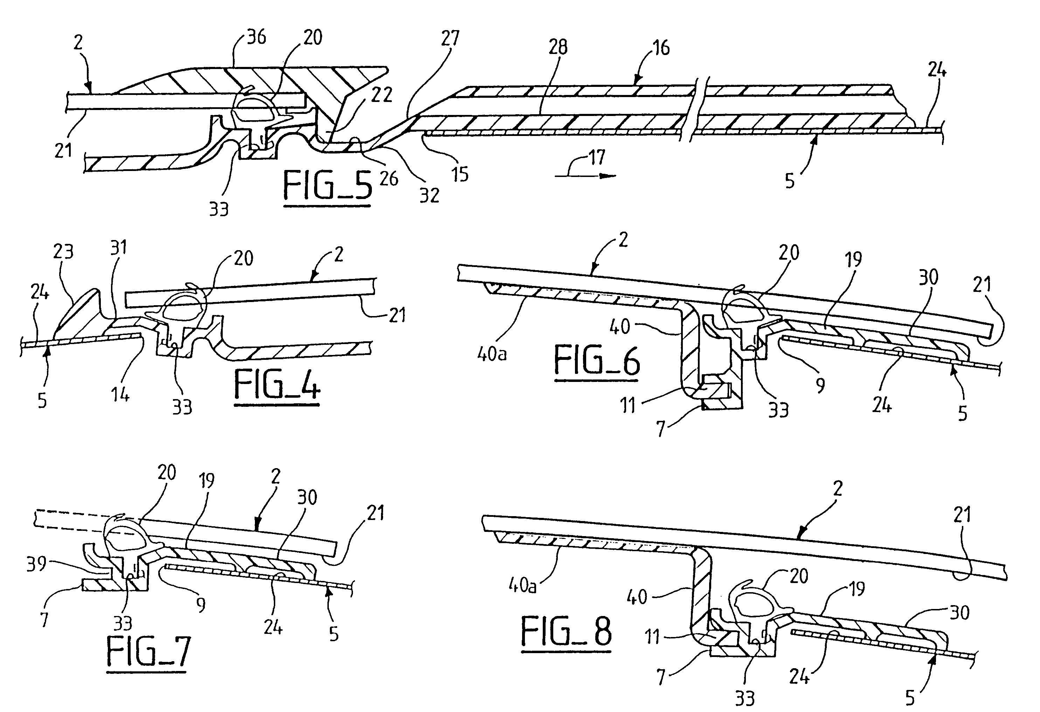

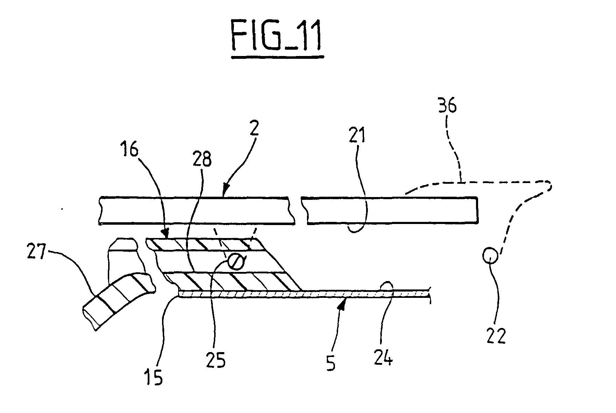

Die Rahmeneinheit 13 enthält auf ihrer vorderen Begrenzung 14 einen mit Bezug zur Rahmeneinheit 13 nach oben vorspringenden Windabweiser 23, der dazu vorgesehen ist, den bewegbaren Deckel 2 und insbesondere den Fahrzeuginnenraum vor den Einflüssen des Fahrtwindes zu schützen (siehe Fig. 4).

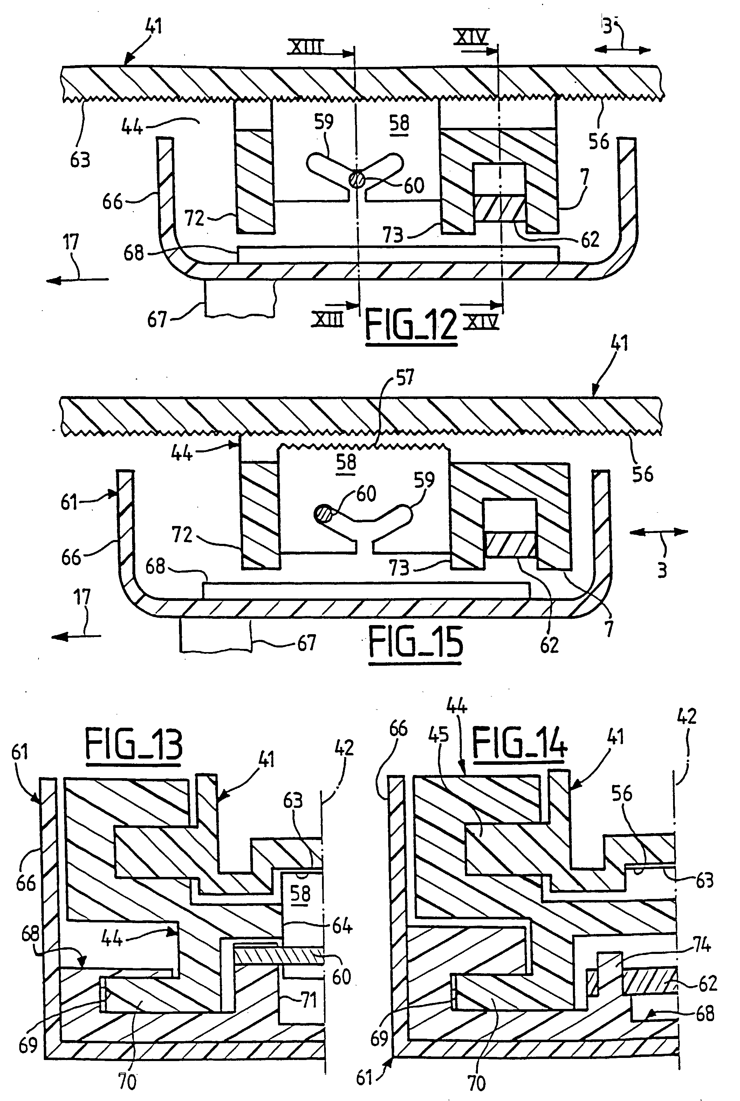

In der gezeigten Ausführungsform erstreckt sich das zentral angeordnete dachfeste Führungselement 16 wesentlich auf der Oberseite 24 des Dachs 5 zur Außenseite der Rahmeneinheit 13 in Öffnungsrichtung 17 des bewegbaren Deckels (siehe Fign. 5 und 11). Die seitlichen Führungselemente 6 und 7 erstrecken sich entlang der seitlichen in Längsrichtung verlaufenden Begrenzungen 8 und 9 der Öffnung 4.

Wie in gestrichelten Linien in Fig. 1 schematisch dargestellt, weist der bewegbare Deckel 2 nahe an jeder seitlichen Begrenzung 8, 9 einen entsprechenden seitlichen Bolzen 10, 11 in der Nähe der vorderen Querbegrenzung 14 des Deckels 2, d.h. an der dem zentral angeordneten Führungselement 16 gegenüberliegenden Begrenzung 14, sowie einen zentralen Führungsbolzen 22 in der Nähe der gegenüberliegenden Querbegrenzung 15, d.h. der hinteren Begrenzung des Deckels 2, auf. Der bewegbare Deckel 2 enthält weiterhin zumindest einen zweiten zentralen Bolzen 25 hinter dem ersten zentralen Bolzen 22 mit Bezug zur Öffnungsrichtung 17 des Deckels 2. Dieser zweite zentrale Bolzen 25 ist ausgelegt, um ebenfalls mit dem zentral angeordneten dachfesten Führungselement 16 in Eingriff zu gelangen (siehe Fig. 11).

Wie in den Fign. 3 und 5 schematisch veranschaulicht, weist jedes Führungselement 6, 7, 16 eine erste Stufe 26 auf, die im wesentlichen parallel zur Rahmeneinheit 13 ist und der geschlossenen Position des bewegbaren Deckels 2 entspricht. Dieser ersten Stufe 26 folgt in der Öffnungsrichtung 17 des bewegbaren Deckels 2 eine Rampe 27, auf welcher der entsprechende Bolzen 10, 11, 22 ansteigt, um den bewegbaren Deckel 2 über die Rahmeneinheit 13 anzuheben. Der Rampe 27 folgt eine zweite Stufe 28, deren Länge der restlichen Verschiebungsstrecke des bewegbaren Deckels 2 entspricht, wobei sich dieser zumindest teilweise geöffnet in seiner angehobenen Position gemäß Fig. 8 befindet.

Wie in den Fign. 5 bis 8 gezeigt, enthält die Rahmeneinheit 13 für jede Begrenzung 8, 9, 14, 15 der Öffnung 4 ein äußeres Teil 29, 30, 31 bzw. 32, welches ausgelegt ist, um auf der entsprechenden Begrenzung des Daches 5 aufzuliegen. Jedes der äußeren Teile ist in Richtung auf den Innenraum der Öffnung 4 durch einen Profilkörper verlängert, der eine nach oben offene Nut 33 enthält und ausgelegt ist, die elastische Randdichtung 20 aufzunehmen. Darüberhinaus weisen die den seitlichen in Längsrichtung verlaufenden äußeren Teilen 29 und 30 zugeordneten Profilkörper gleichermaßen eine Längsnut 39 auf, deren Öffnung der Öffnung 4 des Daches zugewandt ist und welche das entsprechende seitliche in Längsrichtung verlaufende Führungselement 6, 7 bildet, welches den entsprechenden Bolzen 10, 11 des bewegbaren Deckels 2 aufnimmt (siehe Fig. 7).

Jeder Bolzen 10, 11 hat ein unteres Z-förmiges Endteil , dessen mittlerer Abschnitt 40 eine dem Abstand zwischen dem Führungselement 6, 7 und der unteren Seite 21 des Deckels 2 in seiner geschlossenen Position entsprechende Höhe hat. Der zweite Arm 40a des Z-förmigen Profils erstreckt sich entlang der unteren Seite 21 des Deckels 2 und dient der Befestigung dieses Z-förmigen Elements an dem Deckel 2 (siehe Figuren 6 und 8).

Weiterhin zeigt Fig. 6 eine Schnittdarstellung des Führungselements 7 in der Höhe der ersten Stufe 26 dieses Führungselements: Wenn der Bolzen 11 sich in dieser ersten Stufe 26 befindet, ist der bewegbare Deckel 2 in seiner unteren Position, d.h. in seiner geschlossenen Position, ruhend auf der elastischen Randdichtung 20.

Diese elastische Randdichtung 20 ist in den Figuren in der Form dargestellt, die sie im unbelasteten Zustand einnimmt, wenn der bewegbare Deckel 2 nicht gegen die Dichtung 20 angedrückt ist.

In der geschlossenen Position des Deckels 2 ist die das Führungselement 7 bildende Nut 39 in der in Fig. 7 dargestellten Schnittebene leer.

Fig. 8 zeigt die gleiche Schnittebene wie Fig. 7, wobei der bewegbare Deckel 2 eine Position einnimmt, in welcher der Bolzen 10, 11 sich in der zweiten Stufe 28 des entsprechenden Führungselements 6, 7 befindet und die Nut 39 ausfüllt: Der bewegbare Deckel 2 steht in seiner angehobenen zumindest teilweise geöffneten Position in einer vorgegebenen Höhe über dem benachbarten Dach 5 und der Randdichtung 20.

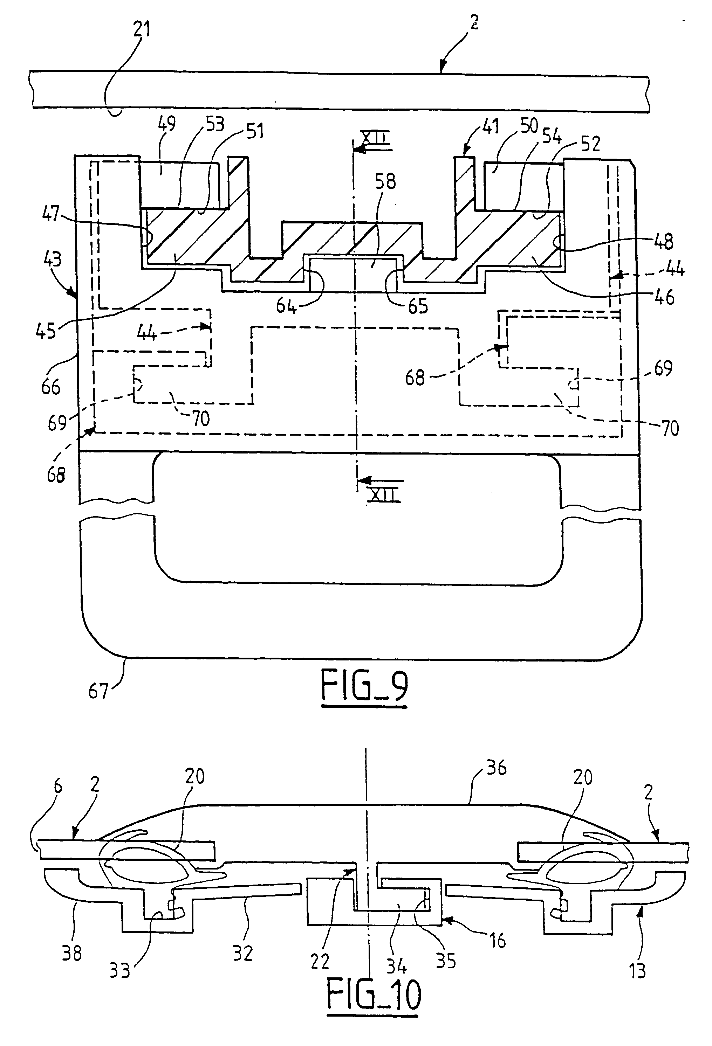

In der veranschaulichten Ausführungsform besitzt gemäß den Fign. 10 und 11 jeder zentrale Bolzen 22, 25 im Vertikalschnitt einen Abschnitt in der Form eines L. Der horizontale Arm 34 des Bolzens 22, 25 ist ausgelegt, um mit einer komplementären ebenfalls L-förmigen Nut 35 des zentral angeordneten in Längsrichtung verlaufenden Führungselements 16 in Eingriff zu gelangen. Aus den Fign. 1 und 5 ist ersichtlich, daß der erste zentrale Bolzen 22 mit einer auf der hinteren Begrenzung 37 des bewegbaren Deckels 2 befestigten Platte 36 etwa mittig zur Begrenzung 37 verbunden ist. Um die Dichtigkeit zwischen dem bewegbaren Deckel 2 und der Rahmeneinheit 13 in der Höhe der Platte 36 zu gewährleisten, weist die Rahmeneinheit etwa in der Mitte ihrer hinteren Begrenzung einen Vorsprung 38 in das Innere der Öffnung 4 auf (siehe Fig. 2). Dieser Vorsprung 38 ermöglicht es, der Randdichtung 20 eine Wellenform zu geben, um die erste Stufe 26 des zentral angeordneten dachfesten Führungselements 16 und den sich auf der Stufe 26 in der geschlossenen Position des Deckels 2 befindenden Bolzen 22 zu umgeben, wie dies in den Fign. 5 und 10 veranschaulicht ist.

Der dargestellte öffnungsfähige Deckel 1 enthält eine mit dem bewegbaren Deckel 2 verbundene Anordnung, die ausgelegt ist, mit einer komplementären mit der Rahmeneinheit 13 verbundenen Anordnung zusammenzuwirken, um die Längsverschiebung in der einen oder der anderen Richtung des bewegbaren Deckels 2 mit Bezug zur Rahmeneinheit 13 zu betätigen.

In der dargestellten Ausführungsform besitzt die Rahmeneinheit 13 eine zentrale in Längsrichtung verlaufende Führungsvorrichtung 41, die sich in etwa in der in Längsrichtung verlaufenden Symmetrieebene 42 der Rahmeneinheit 13 zwischen den seitlichen Führungselementen 6 und 7 befindet und die einstückig mit der Rahmeneinheit 13 und dem zentral angeordneten Führungselement 16 ausgebildet ist. Desweiteren ist der bewegbare Deckel 2 mit einer Betätigungs- und Verriegelungsvorrichtung 43 verbunden, die für eine Gleitbewegung entlang der zentralen Führungsvorrichtung 41 ausgelegt ist.

Der bewegbare Deckel 2 ist mit der Betätigungs- und Verriegelungsvorrichtung 43 mittels einer beliebigen bekannten Vorrichtung, beispielsweise einer Scherenanordnung, verbunden, welche die Verschiebung des bewegbaren Deckels 2 nach oben zu Beginn seiner Öffnungsbewegung, ausgehend von seiner geschlossenen Position, ausgleichen kann.

Der öffnungsfähige Deckel 1 besitzt ebenso eine Anordnung, um den bewegbaren Deckel 2 mit Bezug zur Rahmeneinheit 13 in jeder Position des bewegbaren Deckels 2 zu blockieren, sowie eine Anordnung zur Lösung der Blockieranordnung, um den bewegbaren Deckel 2 in der einen oder der anderen Richtung der zentralen Führungsvorrichtung 41 zu verschieben.

Hierzu weist, wie in den Fign. 9 und 12 bis 15 gezeigt, die Betätigungs- und Verriegelungsvorrichtung 43 eine Kulissenanordnung 44 auf, die ausgelegt ist, mit einer komplementären Anordnung der zentralen Führungsvorrichtung 41 für eine Gleitbewegung längs der zentralen Führungsvorrichtung 41 zusammenzuwirken: Diese komplementäre Anordnung der zentralen Führungsvorrichtung 41 besitzt in der dargestellten Ausführungsform zwei Arme 45 und 46, die im wesentlichen parallel zum Deckel 2 in seiner geschlossenen Position sind und sich zur Außenseite der zentralen Führungsvorrichtung 41 hin erstrecken. Die Kulisse 44 ihrerseits weist zwei Rillen 47 und 48 auf, die ausgelegt sind, die Arme 45 bzw. 46 der zentralen Führungsvorrichtung 41 aufzunehmen.

Jede Rille 47, 48 der Kulisse 44 ist nach oben durch einen Arm 49, 50 begrenzt, von dem die untere Seite 51 bzw. 52 für eine Gleitbewegung auf der oberen Seite 53, 54 des entsprechenden Arms 45, 46 der zentralen Führungsvorrichtung 41 ausgelegt ist.

Die Betätigungs- und Verriegelungsvorrichtung 43 besitzt weiterhin eine mit Bezug zur Kulisse 44 bewegbare Anordnung, die ausgelegt ist, mit einer komplementären Anordnung der zentralen Führungsvorrichtung 41 in Eingriff zu gelangen, um die Kulisse 44 mit Bezug zur zentralen Führungsvorrichtung 41 zu blockieren. Sie umfaßt ebenfalls eine Anordnung, um die bewegbare Anordnung mit Bezug zur Kulisse 44 zwischen einer blockierten Position, in welcher sie in Eingriff mit der komplementären Anordnung der zentralen Führungsvorrichtung 41 ist, und einer gelösten Position, in der sie außer Eingriff mit der komplementären Anordnung der zentralen Führungsvorrichtung 41 ist, zu verschieben.

In der dargestellten Ausführungsform besitzt die zentrale Führungsvorrichtung 41 eine Verzahnung 56, und die bewegbare Anordnung besitzt eine zur Verzahnung 56 komplementäre Verzahnung 57, die ausgelegt ist, mit der Verzahnung 56 in Eingriff zu gelangen.

Die bewegbare Anordnung umfaßt einen Block 58 mit einer Nut 59, die im Längsschnitt V-förmig und so angeordnet ist, daß die Öffnung des V der Verzahnung 57 zugewandt ist.

Eine Achse 60 geht durch die Nut 59 und ist mit einem Griffelement 61 verbunden, welches ausgelegt ist für eine Gleitbewegung in Längsrichtung 3 mit Bezug zur Kulisse 44 entgegen der Wirkung einer Federanordnung 62, die so gestaltet ist, daß sie die Achse 60 in die Position der Nut 59 zurückbringt, die der Spitze des V entspricht.

In der dargestellten Ausführungsform ist die Verzahnung 56 auf der mittleren unteren Seite 63 der zentralen Führungsvorrichtung 41 angebracht, und der Block 58 ist unter der unteren Seite 63 zwischen zwei seitlichen in Längsrichtung verlaufenden Begrenzungen 64, 65 angeordnet, die den Block 58 in Längsrichtung führen. Die Verzahnung 57 ist auf der oberen Seite des Blockes 58 angebracht (siehe Fign. 9 und 13).

Das Griffelement 61 besitzt ein Gehäuse 66, welches auf seiner Außenseite einen Henkel 67 trägt und mittels seiner Innenseite an einem Wagen 68 befestigt ist, der Rillen 69 aufweist, die ähnlich ausgestaltet sind wie die Rillen 47, 48 der Kulisse 44, und welche ausgelegt sind, mit den entsprechenden Armen 70 in Eingriff zu treten, die sich im unteren Abschnitt der Kulisse 44 befinden (siehe Fign. 13 und 14) und die seitlich nach außen mit Bezug zur Kulisse 44 vorspringen.

Die Achse 60 wird von zwei Haltern 71 getragen, die mit Bezug zum Wagen 68 nach oben vorspringen und auf beiden Seiten der Symmetrieebene 42 bzw. des Blocks 58 angeordnet sind.

Der Block 58 ist auf diese Weise in seiner Verschiebung in einer Richtung im wesentlichen vertikal senkrecht zur zentralen Führungsvorrichtung 41 seitlich durch die zwei Halter 71 und in Längsrichtung durch eine Rückwand 72 und eine Vorderwand 73 der Kulisse 44 geführt (siehe Fign. 12 und 15). Die Feder 62 ist in diesem Ausführungsbeispiel ein Stab aus elastischem Material, zum Beispiel aus EPDM (Ethylen-Propylen-Dien-Kautschuk), der auf Haltern 74 des Wagens 68 fixiert (siehe Fig. 14) und zwischen der Vorderwand 73 und einer äußeren Vorderwand 75 der Kulisse 44 angeordnet ist.

Somit gleitet, wenn man am Griff 67 beispielsweise in Öffnungsrichtung 17 des bewegbaren Deckels 2, d.h. in den Figuren 12 und 15 nach links, zieht, der Wagen 68 in der Richtung 17 mit Bezug zur Kulisse 44: Die Achse 60, die mit Bezug zum Wagen 68 fixiert ist, verlagert sich in der Richtung 17 in den entsprechenden Arm der V-förmigen Nut 59, wodurch der Block 58 nach unten verschoben und von der Verzahnung 56 der zentralen Führungsvorrichtung 41 entfernt wird (siehe Fig. 15). Diese Verschiebung des Wagens 68 mit Bezug zur Kulisse 44 erfolgt gegen die Wirkung der Feder 62. Wenn man aufhört, den Griff in der Richtung 17 zu betätigen, läßt die Feder 62 die Kulisse 44 in Längsrichtung in der Richtung 17 mit Bezug zum Wagen 68 gleiten, wodurch die Achse 60 im wesentlichen in den unteren Abschnitt der V-förmigen Nut 59 zurückgeführt wird, wie dies in Fig. 12 dargestellt ist. Der Block wird nach oben, d.h. in Richtung auf die zentrale Führungsvorrichtung 41, bewegt, so daß die Verzahnung 57 des Blockes 58 mit der Verzahnung 56 der zentralen Führungsvorrichtung 41 in Eingriff gelangt, um die Betätigungs- und Verriegelungsvorrichtung 43 mit Bezug zur zentralen Führungsvorrichtung 41 zu verriegeln und um somit den bewegbaren Deckel 2 in der erreichten Position zu blockieren.

Um den bewegbaren Deckel 2 in seine geschlossene Position zurückzubringen, betätigt man den Griff 67 in der Richtung 18 nach rechts in den Fign. 12 und 15, die Achse 60 verlagert sich in den rechten Arm der V-förmigen Nut 59, um den Block 58 von der zentralen Führungsvorrichtung 41 zu entfernen und die Verschiebung der Betätigungs- und Verriegelungsvorrichtung 43 und des bewegbaren Deckels 2 in der Schließrichtung 18 zu gestatten.

Wie in den Fign. 1 und 2 veranschaulicht, besitzt der bewegbare Deckel 2 eine im wesentlichen rechteckige Form und hat in Querrichtung eine Abmessung, die größer ist als die der vorderen Querbegrenzung 14 der Öffnung 4.

Um die vordere Querbegrenzung des bewegbaren Deckels 2 zu schützen, setzt sich der Windabweiser 23 in Querrichtung zu beiden Seiten der Rahmeneinheit 13 mittels zweier Fortsätze 80 fort, die sich jeweils mindestens bis zur entsprechenden Ecke des bewegbaren Deckels 2 erstrecken.

Der bewegbare Deckel 2 ist beispielsweise ein Deckel aus Glas oder aus einem transparenten, durchscheinenden oder opaken synthetischen Material.

### Bezugszeichenliste:

- 1: öffnungsfähiger Deckel
- 2: bewegbarer Deckel
- 3: Längsrichtung
- 4: Öffnung
- 5: Dach
- 6, 7: seitliches Führungselement
- 8, 9: seitliche Begrenzung
- 10, 11: Bolzen
- 13: Rahmeneinheit
- 14: vordere Begrenzung
- 15: hintere Begrenzung
- 16: zentrales dachfestes Führungselement
- 17, 18: Richtung
- 19: obere Fläche
- 20: elastische Randdichtung
- 21: untere Seite (von 2)
- 22: Bolzen
- 23: Windabweiser
- 24: Oberseite
- 25: Bolzen
- 26: erste Stufe
- 27: Rampe
- 28: zweite Stufe
- 29 bis 32: äußeres Teil (von 13)
- 33: Nut
- 34: horizontaler Arm (von 22, 25)
- 35: Nut
- 36: Platte
- 37: hintere Begrenzung (von 2)
- 38: Vorsprung
- 39: Längsnut (von 29, 30)
- 40: mittlerer Abschnitt (von 10, 11) 12
- 40a: zweiter Arm (von 10, 11)
- 41: zentrale Führungsvorrichtung
- 42: Symmetrieebene
- 43: Betätigungs- und Verriegelungsvorrichtung
- 44: Kulissenanordnung
- 45, 46: Arm (von 41)
- 47, 48: Rille (von 44)
- 49, 50: Arm (von 47, 48)
- 51, 52: untere Seite (von 49, 50)
- 53, 54: obere Seite (von 49, 50)
- 56: Verzahnung (von 41)
- 57: Verzahnung (von 58)
- 58: Block
- 59: Nut
- 60: Achse
- 61: Griffelement
- 62: Federanordnung
- 63: mittlere untere Seite (von 41)
- 64, 65: seitliche Begrenzung in Längsrichtung
- 66: Gehäuse
- 67: Griff
- 68: Wagen
- 69: Rille
- 70: Arme
- 71: Halter
- 72: Rückwand
- 73: Vorderwand
- 74: Halter
- 75: äußere Vorderwand
- 80: Fortsatz

## Patentansprüche

1. Deckel zum wahlweisen Verschließen oder wenigstens teilweisen Freigeben einer Öffnung, vorzugsweise einer Öffnung (4) in einem Fahrzeug,
mit seitlich am Deckel (2) angeordneten Führungsorganen (10, 11), die mit längs der Öffnung (4) verlaufenden seitlichen Führungselementen (6, 7) im Eingriff stehen,
mit einer Betätigungs- und Verriegelungsvorrichtung (43), die etwa in der Mitte der Öffnung (4) mit dem Deckel (2) in Verbindung steht, und
mit einem hinter der Öffnung (4) angeordneten dachfesten Führungselement (16), mit dem wenigstens ein am Deckel (2) angeordnetes Führungsorgan (22) zumindest bei einer Verschiebung des Deckels (2) in Eingriff bringbar ist,
dadurch gekennzeichnet,
daß zwischen den seitlichen Führungselementen (6, 7) eine zentrale Führungsvorrichtung (41) angeordnet ist, mit der die Betätigungs- und Verriegelungsvorrichtung (43) in jeder Position des Deckels (2) in Eingriff bringbar ist.

2. Deckel nach Anspruch 1, dadurch gekennzeichnet, daß er eine Rahmeneinheit (13) umfaßt, die sich entlang Rändern (8, 9; 14, 15) der Öffnung (4) erstreckt und welche die seitlichen Führungselemente (6, 7), das hinter der Öffnung angeordnete dachfeste Führungselement (16) sowie die zentrale Führungsvorrichtung (41) aufweist, und daß die Rahmeneinheit (13) auf ihrer oberen Fläche (19) eine elastische Randdichtung (20) besitzt, welche die Öffnung (4) umgibt.

3. Deckel nach Anspruch 1 oder 2, dadurch gekennzeichnet, daß am Deckel (2) zumindest ein weiteres Führungsorgan (25) angeordnet ist, das ausgelegt ist, mit dem dachfesten Führungselement (16) in Eingriff zu gelangen.

4. Deckel nach einem der vorhergehenden Ansprüche, dadurch gekennzeichnet, daß die Führungselemente (6, 7, 16) ein vorbestimmtes Profil haben, so daß der Deckel (2) in der geschlossenen Stellung des Deckels (2) auf der elastischen Randdichtung (20) mittels seiner unteren Seite (21) anliegt und zumindest beim Verschieben einen horizontalen Abstand von der elastischen Randdichtung (20) einnimmt.

5. Deckel nach einem der vorhergehenden Ansprüche, dadurch gekennzeichnet, daß die am Deckel (2) angordneten Führungsorgane (10, 11, 22, 25) als Bolzen ausgestaltet sind, die jeweils für eine Gleitbewegung innerhalb der Führungselemente (6, 7, 16) der Rahmeneinheit (13) ausgelegt sind.

6. Deckel nach einem der vorhergehenden Ansprüche, dadurch gekennzeichnet, daß die mit dem Deckel (2) verbundene Betätigungs- und Verriegelungsvorrichtung (43) zur Betätigung der Verschiebung des Deckels (2) längs der zentralen Führungsvorrichtung (41) mittels einer Kulissenanordnung (44) bewegbar ist und ein Arretierungsorgan (58) aufweist, welches im wesentlichen senkrecht zur zentralen Führungsvorrichtung (41) verschiebbar ist zwischen einer arretierenden Position, in der es mit der zentralen Führungsvorrichtung (41) in Eingriff gelangt, und einer freigebenden Position, in der es außer Eingriff mit der zentralen Führungsvorrichtung (41) steht, um den Deckel (2) mit Bezug zur zentralen Führungsvorrichtung (41) in jeder Position zu arretieren bzw. zur Verschiebung freizugeben.

7. Deckel nach Anspruch 6, dadurch gekennzeichnet, daß zur Führung der Verschiebung der Betätigungs- und Verriegelungsvorrichtung (43) in Längsrichtung (3) mit Bezug zur zentralen Führungsvorrichtung (41) die Kulissenanordnung (44) der Betätigungs- und Verriegelungsvorrichtung (43) mit einer komplementären Anordnung (45, 46) der zentralen Führungsvorrichtung (41) zusammenwirkt.

8. Deckel nach Anspruch 6 oder 7, dadurch gekennzeichnet, daß die Betätigungs- und Verriegelungsvorrichtung (43) ein Griffelement (61) sowie eine Federanordnung (62) aufweist, die derart mit einer die Verschiebung des Arretierungsorgans (58) steuernden Anordnung (59, 60) zusammenwirken, daß das Arretierungsorgan (58) bei Nichtbetätigung des Griffelements (61) in seiner arretierenden Grundposition und bei Betätigung des Griffelements (61) in Längsrichtung (3) mit Bezug zur zentralen Führungsvorrichtung (41) in seiner freigebenden Position steht.

9. Deckel nach einem der Ansprüche 6 bis 8, dadurch gekennzeichnet, daß die zentrale Führungsvorrichtung (41) eine Verzahnung (56) aufweist, die zur Arretierung des Deckels (2) mit einer komplementären Verzahnung (57) des Arretierungsorgans (58) in Eingriff steht.

10. Deckel nach einem der Ansprüche 6 bis 9, dadurch gekennzeichnet, daß das Griffelement (61) bei Betätigung entgegen einer Wirkung der Federanordnung (62) mit Bezug zur Kulissenanordnung (44) aus seiner Grundposition in Längsrichtung (3) verschiebbar ist und eine Achse (60) aufweist, die mit einer Kulisse (59) des als Block (58) ausgebildeten Arretierungsorgans zusammenwirkt und dessen Verschiebung zwischen seiner arretierenden Grundposition und seiner freigebenden Position steuert.

11. Deckel nach Anspruch 10, dadurch gekennzeichnet, daß die Kulisse (59) V-förmig ausgebildet und mit ihrer Öffnung der zentralen Führungsvorrichtung (41) zugewandt ist, und daß in der Grundposition des Griffelements (61) bei Nichtbetätigung desselben die Achse (60) sich in einer Position der V-förmigen Nut befindet, die der Spitze des V entspricht, wodurch das Arretierungsorgan (58) sich in seiner arretierenden Position im Eingriff mit der zentralen Führungvorrichtung (41) befindet.

## Claims

1. A cover for the optional closure or at least partial opening of an aperture, for example an opening (4) in a vehicle,
with, disposed laterally on the cover (2), guide means (10, 11) which engage with lateral guide elements (6, 7) extending along the aperture (4), with an actuating and locking device (43) which is connected to the cover (2) substantially in the middle of the aperture (4), and
with, disposed behind the aperture (4), and rigid with the roof, a guide element (16) with which at least one guide member (22) disposed on the cover (2) can be brought into engagement at least upon a displacement of the cover (2),
characterised in that
between the lateral guide element (6, 7) there is a central guide device (41) with which the actuating and locking device (43) can be brought into engagement in any position of the cover (2).

2. A cover according to claim 1, characterised in that it comprises a frame unit (13) which extends along edges (8, 9; 14, 15) of the aperture (4) and which comprises the lateral guide elements (6, 7), the guide element (16) rigid with the roof and disposed behind the aperture, and the central guide device (41) and in that the frame unit (13) has on its upper surface (19) a resilient marginal seal (20) which passes around the aperture (4).

3. A cover according to claim 1 or 2, characterised in that there is on the cover (2) at least one further guide element (25) which is designed to engage the guide element (16) which is rigid with the roof.

4. A cover according to one of the preceding claims, characterised in that the guide elements (6, 7, 16) have a predetermined profile so that in the closed position of the cover (2), the cover (2) has its under side (21) bearing on the resilient marginal seal (20) and, at least upon displacement, assumes a horizontal distance from the resilient marginal seal (20).

5. A cover according to one of the preceding claims, characterised in that the guide members (10, 11, 22, 25) disposed on the cover (2) are constructed as pins which are designed for a sliding movement within the guide elements (6, 7, 16) of the frame unit (13).

6. A cover according to one of the preceding claims, characterised in that the actuating and locking device (43) connected to the cover (2) can be moved by means of a link arrangement (44) lengthwise of the central guide device (41) in order to displace the cover (2) and in that it comprises a locking member (58) which is adapted for displacement substantially at right-angles to the central guide device (41) between a locking position in which it engages the central guide device (41) and a releasing position in which it is disengaged from the central guide device (41) in order to lock the cover (2) in any position in relation to the central guide device (41) or in order to allow it to move.

7. A cover according to claim 6, characterised in that, for guiding displacement of the actuating and locking device (43) in the longitudinal direction (3) in relation to the central guide device (41), the link arrangement (44) of the actuating and locking device (43) co-operates with a matching arrangement (45, 46) on the central guide device (41).

8. A cover according to claim 6 or 7, characterised in that the actuating and locking device (43) comprises a handle element (61) as well as a spring arrangement (62) which so co-operate with an arrangement (59, 60) for controlling displacement of the locking member (58) that the said locking member (58), when the handle element (61) is not being actuated, is in its basic locking position while, upon actuation of the handle element (61) in the longitudinal direction (3), it is in its releasing position in relation to the central guide device (41).

9. A cover according to one of claims 6 to 8, characterised in that the central guide device (41) comprises a toothed arrangement (56) which engages a matching toothed arrangement (57) on the locking member (58) in order to arrest movement of the cover (2).

10. A cover according to one of claims 6 to 9, characterised in that when actuated against the action of the spring arrangement (62) in relation to the link arrangement (44), the handle element (61) can be displaced out of its basic position and in a longitudinal direction (3) and comprises a spindle (6) which co-operates with a link (49) on the locking member which is constructed as a block (58), and controls its displacement between a basic locking position and its releasing position.

11. A cover according to claim 10, characterised in that the link (59) is of V-shaped construction, its opening facing the central guide device (41) and in that, in the basic position of the handle element (61) when it is not being actuated, the spindle (60) is in a position in the V-shaped groove which corresponds to the tip of the V, so that the locking member (58) is in its locking position and engages the central guide device (41).

## Revendications

1. Panneau permettant à volonté d'obturer ou de dégager au moins partiellement une ouverture, de préférence une ouverture (4) dans le toit d'un véhicule, comportant,
- des organes de guidage (10, 11) disposés latéralement sur le panneau (2) et en prise avec des éléments latéraux de guidage (6, 7) disposés le long de l'ouverture (4),
- un dispositif de manoeuvre et de verrouillage (43), relié au panneau (2) à peu près au milieu de l'ouverture (4),
- un élément de guidage (16), solidaire du toit et monté en arrière de l'ouverture (4), avec lequel peut être amené en prise au moins un organe de guidage (22) monté sur le panneau (2), au moins par coulissement du panneau (2),
caractérisé en ce qu'
entre les éléments latéraux de guidage (6, 7) est monté un dispositif central de guidage (41) avec lequel le dispositif de manoeuvre et de verrouillage (43) peut être amené en prise dans toute position du panneau (2).

2. Panneau selon la revendication 1,
caractérisé en ce qu'
il comprend un cadre (13) qui s'étend le long des bords (8, 9 ; 14, 15) de l'ouverture (4) et qui comporte les éléments latéraux de guidage (6, 7), l'élément de guidage (16) solidaire du toit et situé derrière l'ouverture, ainsi que le dispositif central de guidage (41), ce cadre (13) portant sur sa face supérieure (19) un joint d'étanchéité élastique (20) entourant l'ouverture (4).

3. Panneau selon la revendication 1 ou 2,
caractérisé en ce que
sur le panneau (2) est monté au moins un autre organe de guidage (25) conçu pour venir en prise avec l'élément de guidage (16) solidaire du toit.

4. Panneau selon l'une quelconque des revendications précédentes,
caractérisé en ce que
les éléments de guidage (6, 7, 16) ont un profil défini tel que le panneau (2), quand il est fermé, est appliqué par sa face inférieure (21) sur le joint d'étanchéité élastique (20), et au moins quand il coulisse, s'espace horizontalement du joint élastique (20).

5. Panneau selon l'une quelconque des revendications précédentes,
caractérisé en ce que
les organes de guidage (10, 11, 22, 25) montés sur le panneau (2) ont la forme d'ergots conçus pour pouvoir glisser à l'intérieur des éléments de guidage (6, 7, 16) appartenant au cadre (13).

6. Panneau selon l'une quelconque des revendications précédentes,
caractérisé en ce que
le dispositif de manoeuvre et de verrouillage (43) relié au panneau (2) pour faire coulisser le panneau (2) peut se déplacer le long du dispositif central de guidage (41) au moyen d'un système à coulisse (44), et comporte un organe d'arrêt (58) pouvant coulisser sensiblement perpendiculairement au dispositif central de guidage (41), entre une position de blocage dans laquelle il vient en prise avec le dispositif (41) et une position de libération, dans laquelle il n'est pas en prise avec le dispositif (41), ceci pour pouvoir, dans n'importe quelle position bloquer ou libérer le coulissement du panneau (2) par rapport au dispositif central de guidage (41).

7. Panneau selon la revendication 6,
caractérisé en ce que
pour guider le coulissement du dispositif de manoeuvre et de verrouillage (43) en direction longitudinale (3) par rapport au dispositif central de guidage (41), le système à coulisse (44) que comporte le dispositif (43) coopère avec un système complémentaire (45, 46) du dispositif central de guidage (41).

8. Panneau selon la revendication 6 ou 7,
caractérisé en ce que
le dispositif de manoeuvre et de verrouillage (43) comprend un élément de prise (61) et un dispositif à ressort (62) qui coopèrent avec un dispositif (59, 60) commandant le coulissement de l'organe d'arrêt (58), de manière telle que cet organe (58), quand l'élément de prise (61) n'est pas actionné, occupe sa position de base bloquée, tandis que quand l'élément de prise (61) est actionné en direction longitudinale (3) par rapport au dispositif central de guidage (41), l'organe (58) occupe sa position de libération.

9. Panneau selon l'une quelconque des revendications 6 à 8,
caractérisé en ce que
le dispositif central de guidage (41) porte une denture (56) qui, pour arrêter le panneau (2), est en prise avec une denture complémentaire (57) que porte l'organe d'arrêt (58).

10. Panneau selon l'une quelconque des revendications 6 à 9,
caractérisé en ce que l'élément de prise (61) quand il est manoeuvré contre l'action du dispositif à ressort (62) peut, par rapport au système à coulisse (44) coulisser en direction longitudinale (3) à partir de sa position de base, et il présente un axe (60) qui coopère avec une coulisse (59) de l'organe d'arrêt constitué sous la forme d'un bloc (58), et qui commande le coulissement de ce bloc entre sa position de base bloquée et sa position de libération.

11. Panneau selon la revendication 10,
caractérisé en ce que
la coulisse (59) a la forme d'un V ouvert en direction du dispositif central de guidage (41) et, quand l'élément de prise (61) occupant sa position de base n'est pas actionné, l'axe (60) occupe dans la rainure en forme de V une position correspondant à la pointe du V, de sorte que l'organe d'arrêt (58) est dans la position où il bloque en étant en prise avec le dispositif central de guidage (41).
